# EUROPEAN PATENT APPLICATION

(11) **EP 2 871 102 A1**
(43) Date of publication of application: **13.05.2015**
(21) Application number: 13192341.9
(22) Date of filing: 11.11.2013
(51) Int. Cl.: B60T 7/04, B60T 8/40

(54) **Brake pedal force simulator for vehicle braking system**

(71) Applicant: Ford Otomotiv Sanayi Anonim Sirketi, 34885 Sancaktepe/Istanbul (TR)
(72) Inventor: Akça/Bayrak, Dilek, Kurtköy/Pendik/Istanbul (TR); Ergin, Eren, KARTAL (TR); Duman, Ali, 34674 Uskudar/ISTANBUL (TR)
(74) Representative: Drömer, Hans-Carsten

(57) **Abstract**

The present invention relates to a brake pedal force simulator for a vehicle braking system comprising a brake pedal (2) pivotably supported by a fulcrum pin (3) on a pedal support (4), an electrical actuator (5) operatively coupled to said brake pedal (2) to selectively exert a force on said brake pedal (2), a position sensor (6) for generating a position signal indicative of the actual position of said brake pedal (2), an electronic control unit (7) having programmed therein a relationship between said position signal and a desired brake pedal force and controlling said electrical actuator (5) to selectively exert said desired brake pedal force on said brake pedal (2), wherein the electrical actuator (5) is coupled to the fulcrum pin (3) of the brake pedal (2).

## Description

The present invention relates in general to vehicle braking systems and in particular to an improved brake pedal force simulator for a vehicle braking system.

Most vehicles are equipped with a brake system for retarding or stopping movement of the vehicle in a controlled manner. A typical braking system for an automobile includes brake assemblies for each of the wheels. The brake assemblies are actuated by hydraulic, pneumatic, or electrical mechanisms when an operator of the vehicle depresses a brake pedal. The structures of the brake assemblies as well as the actuators therefor are well known in the art.

Typical conventional light vehicle brake systems are hydraulic, by which is meant that the brake pedal actuates a master cylinder, which in turn provides pressurized hydraulic fluid to actuate the brake assemblies. A hydraulic or vacuum booster may be provided to assist the brake pedal in actuating the master cylinder, but the braking demanded by the driver is conveyed to actuate the brake assemblies as mechanical forces and pressures.

In contrast, some brake systems are known in the art generally as brake-by-wire systems, by which is meant that at some point between the brake pedal and the brake assemblies at the wheels of the vehicle, the brake demand is conveyed as an electrical brake demand signal. This brake demand signal is used to control the operation of an electrical actuator. The electrical actuator may directly move a mechanism to force the brake pads or brake shoes of the brake assemblies into contact with the corresponding rotating brake surface, or may operate a hydraulic pump to pump brake fluid to actuate the brake assemblies. This latter type of brake-by-wire system, in which the brake demand is transmitted electrically to control a hydraulic pump, is also variously known as electro-hydraulic braking, electrohydraulic control, or electronic brake management.

Generally, in automotive brake-by-wire systems, such as those as well which are in use with electric vehicles (EV) or hybrid electric vehicles (HEV) having both friction braking and regenerative braking, it is known to provide a brake pedal force simulator to replicate the force/displacement response of a conventional hydraulic brake system. Such pedal force simulator devices are installed in an effort to obtain transparency to the vehicle driver regarding the type of braking mode used by the vehicle at any particular time. In other words, the amount of pedal force required from a driver to produce a given rate of vehicle deceleration should not change when regenerative braking is present.

In the event that a brake-by-wire portion of a system becomes unavailable, such as is sometimes the case when, for example, a regenerative braking system has fully recharged an energy storage device, or if a braking system impairment limits the ability to provide assisted braking, it is necessary to rely upon the conventional hydraulic brakes. In such case, it is desirable to eliminate the resistive portion of brake pedal force which would otherwise be provided by a pedal force simulator. This prevents the driver from having to overcome not only brake pedal force arising from the master cylinder, but also the force arising from the brake pedal force simulator.

Basically, there are known three different types of brake pedal force simulators: a passive mechanical pedal force simulator which consists of spring and damper components, an active vacuum booster, and an actively controlled hydraulic power brake. The latter are quite similar, wherein different sensors monitor the vehicle state and the hydraulic control unit modulates the vacuum pump and thereby the vacuum booster to adjust brake pedal force based on brake system modes of operation.

While the manufacturing costs for passive mechanical pedal force simulators are relatively low, the characteristics of the pedal simulator can only be changed by physical modification of the pedal simulator, such as by changing out the spring used in the pedal simulator for a spring with a different spring rate or other physical characteristics. This drawback means that for a supplier to produce brake systems having different pedal feel characteristics for different models of cars, which may be desired by different manufacturers of automobiles, a variety of models of pedal simulators must be supplied, each having different characteristics.

The hitherto known actively controlled pedal force simulators are complex and therefore relatively expensive to manufacture.

For example, a programmable electronic brake pedal force simulator for a vehicle braking system is disclosed in US 6,105,737. The pedal simulator is coupled to a brake pedal, and includes an electrical actuator operatively coupled to the brake pedal to selectively exert a force on the brake pedal. A position sensor is provided for generating a position signal indicative of the position of the brake pedal. A force sensor is provided for generating a force signal indicative of the force exerted upon the brake pedal by a driver. An electronic control unit is provided which has programmed therein a desired relationship between the position signal and the force signal. The electronic control unit determines an actual relationship between the position signal and the force signal and compares the actual relationship thus determined with the desired relationship. The electronic control unit controls the electrical actuator to selectively exert a force on the brake pedal to conform the actual relationship to the desired relationship. The electrical actuator is embodied as a variable torque reversible electric motor that is coupled to the brake pedal via a rotary to linear motion converter.

Another electrically controlled brake pedal force simulator is disclosed, for example, in US 2008/0303340 A1.

Further, a hydraulically operated brake pedal force simulator is described, for example, in DE 10 2010 050 815 A1. Another hydraulic pedal simulator is disclosed in US 2012/0103452 A1.

Brake pedal force simulators which eliminate the simulation force during emergency, non-assisted and failure conditions are disclosed, for example, in US 7,219,966 B2 and US 7,357,465 B2.

It is therefore an object of the present invention to provide an improved brake pedal force simulator that is easily adjustable for different types or models of vehicles, is simplified, thus, cheaper to manufacture and implement than conventional pedal force simulators and is easily controllable. Moreover, the brake pedal force simulator shall be compact.

It is to be understood that the features disclosed in the following detailed description may be combined in any technically reasonable and practical way and disclose further embodiments of the present invention.

According to the present invention there is provided a brake pedal force simulator for a vehicle braking system comprising a brake pedal pivotably supported by a fulcrum pin on a pedal support, an electrical actuator operatively coupled to said brake pedal to selectively exert a force on said brake pedal, a position sensor for generating a position signal indicative of the actual position of said brake pedal, an electronic control unit having programmed therein a relationship between said position signal and a desired brake pedal force and controlling said electrical actuator to selectively exert said desired brake pedal force on said brake pedal, wherein the electrical actuator is coupled to the fulcrum pin of the brake pedal.

As the brake pedal force to be exerted on the brake pedal is programmable as a function of the pedal stroke (pedal position/angle) the brake pedal force simulator can be easily adapted to different types or models of vehicles and vehicle variants as only software parameters of the brake pedal force simulator have to be adapted to the specific vehicle type. Unlike a passive pedal simulator no physical components have to be changed. As a result, investment costs for the brake pedal force simulator according to the present invention are reduced. Furthermore, the brake pedal force simulator according to the invention can easily be implemented for both brake-by-wire and force actuated braking systems. Additionally, in case of an emergency braking or brake failure the brake pedal force simulator according to the present invention can even assist a driver to obtain the demanded actuation by exerting a pedal force on the brake pedal in the direction the driver would normally actuate the brake pedal. Since the electrical actuator is coupled to the fulcrum pin of the brake pedal the brake pedal force simulator according to the invention can be constructed more compact with a simplified design.

According to a preferred embodiment of the present invention the electrical actuator of the brake pedal force simulator is a two way drivable rotary DC electric motor driven by a DC motor driver controlled by the electronic control unit. Thus, no rotary to linear motion converter has to be provided for coupling the DC electric motor to the brake pedal fulcrum pin resulting in a simplified and compact brake pedal force simulator.

According to yet another preferred embodiment the DC motor driver is configured to generate a motor torque signal indicative of the actual motor torque of the DC electric motor and said electronic control unit I adapted to control said electrical actuator to selectively exert a force on said brake pedal to conform said actual motor torque to said desired brake pedal force. Thus, an additional sensor to determine the actual load on the brake pedal is avoided further reducing the manufacturing costs of the brake pedal force simulator according to the invention.

According to still another preferred embodiment the electronic control unit is configured to control said electrical actuator such that it selectively exerts an additional brake force on said brake pedal to assist a driver in an emergency brake event or a brake failure. As used herein, emergency brake events are defined as situations where a large amount of braking force is required in a short period of time. As used herein, brake failure conditions are defined as a power failure or the failure of brake boosters to supplement the braking force. Thus, the brake pedal force simulator according to the invention opposes the operation at times when high brake forces are needed.

Further objects and advantages of the present invention will become more apparent from the following detailed description of a preferred embodiment shown in the accompanying drawing. This description should not be considered limiting in any way. With reference to the accompanying drawing:

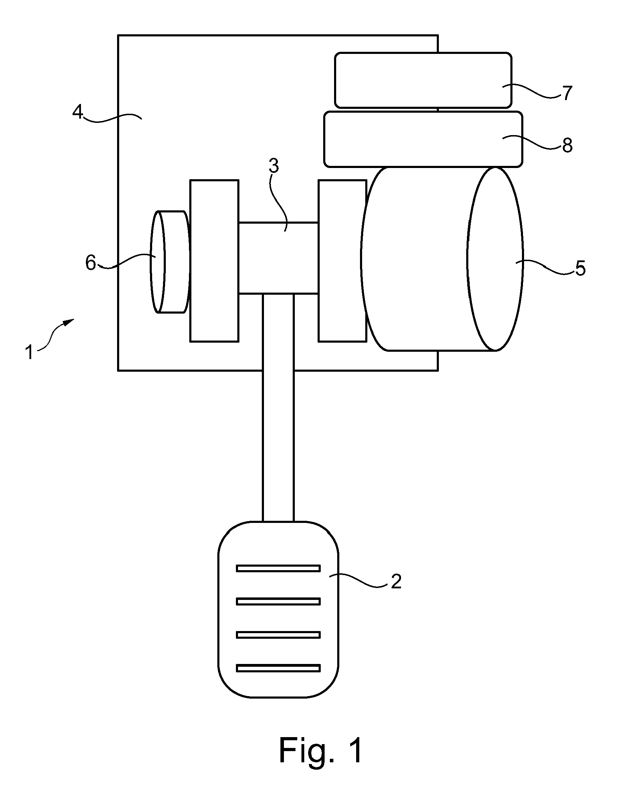

- FIG. 1: depicts a schematic view of a brake pedal force simulator for a vehicle braking system according to an embodiment of the present invention.

A detailed description of one embodiment of the disclosed apparatus is presented herein by way of exemplification and not limitation with reference to the figure.

FIG. 1 shows a schematic view of a brake pedal force simulator 1 for a vehicle braking system (not shown) according to an embodiment of the present invention. The pedal simulator 1 comprises a brake pedal 2 pivotably supported by a fulcrum pin 3 on a pedal support 4. Furthermore, the brake pedal force simulator 1 comprises an electrical actuator 5 shown in the form of a rotary two way drivable DC electric motor. The DC electric motor 5 is coupled to the brake pedal 2 to selectively exert a force on the brake pedal 2. Additionally, there is provided a position sensor 6 shown in the form of an angular sensor for generating a position signal indicative of the actual position of the brake pedal 2. The position sensor 6 could also be a linear sensor measuring the brake pedal stroke position.

As can be further seen in FIG. 1, the brake pedal force simulator 1 according to the depicted embodiment comprises an electronic control unit 7. The electronic control unit 7 has programmed therein a relationship between the position signal generated by the position sensor 6 and a desired brake pedal force. In the preferred embodiment shown in FIG. 1 the electronic control unit 7 controls the DC electric motor 5 via a DC motor driver 8 to selectively exert the desired brake pedal force on the brake pedal 2.

As shown in FIG. 1, the DC electric motor 5 is coupled to the fulcrum pin 3 of the brake pedal 2. Preferably the motor 5 directly drives the fulcrum pin 3. It is to be noted that a transmission mechanism may also be interposed between the motor 5 and the fulcrum pin 3.

The parameters programmed into the electronic control unit 7 shall comprise at least the brake pedal arm length, the brake pedal position and the body mounting which is generally necessary to be unique for different vehicle variants.

During operation the electronic control unit 7 collects data from an electronic control unit (ECU) (not shown) of the vehicle conducting the electronic stability program (ESP), a vehicle CAN bus, which generally contains data from a powertrain control module and a battery monitoring system, and from other sensors related to the brake pedal force simulator, for example, the pedal position sensor 6 and a vacuum sensor (not shown) of a vacuum booster (also not shown) of the vehicle braking system. The electronic control unit 7 thus calculates the required brake pedal force and controls the DC motor driver 8 and consequently the DC electric motor 5. Furthermore, the electronic control unit 7 sends data such as brake pedal position (angle), pedal stroke speed, and DC motor torque to both the ESP unit and the CAN bus of the vehicle.

Preferably the load on the brake pedal 2 is indirectly calculated from the output of the DC motor driver 8 and provided to the electronic control unit 7 of the brake pedal force simulator 1. It is to be noted that the pedal load could also be measured directly by a specific sensor.

The vehicle ESP unit (not shown) modulates all braking actions of the vehicle. An ESP unit for electric vehicles (EV) or hybrid electric vehicles (HEV) also coordinates regenerative braking by adjusting blending of frictional and magnetic brake torques. The ESP unit shares the blending information or any corresponding signal to the electronic control unit 7 of the brake pedal force simulator 1.

In case of a vacuum source failure or hydraulic failure of one of the brake circuits, the brake pedal force simulator 1 can assist a driver by applying force in the favour of brake application which enhances vehicle safety.

In case of a stability control operation (ESP) the brake pedal force simulator 1 remains in idle mode. The same is the case when there is a battery recharge failure (e.g. high temperature of the battery or battery fully charged).

Preferably the brake pedal force simulator according to the present invention is used in an electric or hybrid electric vehicle having a brake-by-wire and a force actuated hydraulic braking system.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best modes contemplated for carrying out this invention, but that the invention will include all embodiments falling within the scope of the claims.

### List of reference numerals:

- 1: Brake pedal force simulator
- 2: Brake pedal
- 3: Fulcrum pin
- 4: Pedal support
- 5: Electrical actuator
- 6: Position sensor
- 7: Electronic control unit
- 8: DC motor driver

## Claims

1. A brake pedal force simulator for a vehicle braking system comprising
a brake pedal (2) pivotably supported by a fulcrum pin (3) on a pedal support (4),
an electrical actuator (5) operatively coupled to said brake pedal (2) to selectively exert a force on said brake pedal (2),
a position sensor (6) for generating a position signal indicative of the actual position of said brake pedal (2),
an electronic control unit (7) having programmed therein a relationship between said position signal and a desired brake pedal force and controlling said electrical actuator (5) to selectively exert said desired brake pedal force on said brake pedal (2),
wherein the electrical actuator (5) is coupled to the fulcrum pin (3) of the brake pedal (2).

2. The brake pedal force simulator according to claim 1, wherein the electrical actuator (5) is a two way drivable rotary DC electric motor driven by a DC motor driver (8) controlled by the electronic control unit (7).

3. The brake pedal force simulator according to claim 2, wherein the DC motor driver (8) is configured to generate a motor torque signal indicative of the actual motor torque of the DC electric motor (5) and said electronic control unit (7) is adapted to control said electrical actuator (5) to selectively exert a force on said brake pedal (2) to conform said actual motor torque to said desired brake pedal force.

4. The brake pedal force simulator according to any of the preceding claims, wherein the electronic control unit (7) is configured to control said electrical actuator (5) such that it selectively exerts an additional brake force on said brake pedal (2) to assist a driver in an emergency brake event or a brake failure.
